# EUROPÄISCHE PATENTSCHRIFT

(11) **EP 0 724 933 B1**
(45) Veröffentlichungstag und Bekanntmachung des Hinweises auf die Patenterteilung: **29.09.1999**
(21) Anmeldenummer: 95120351.2
(22) Anmeldetag: 21.12.1995
(51) Int. Cl.: B24B 53/10, B23Q 1/34

(54) **Abstrahlvorrichtung für eine Bandschleifmaschine**
Blasting device for a belt grinding machine
Dispositif de soufflage pour une meuleuse à bande

(30) Priorität: 11.01.1995 DE 19500611
(43) Veröffentlichungstag der Anmeldung: 07.08.1996
(73) Patentinhaber: Heesemann, Jürgen, Dipl.-Ing., D-32547 Bad Oeynhausen (DE)
(72) Erfinder: Heesemann, Jürgen, Dipl.-Ing., D-32547 Bad Oeynhausen (DE)
(74) Vertreter: Lins, Edgar, Dipl.-Phys. Dr.jur.

(56) Entgegenhaltungen:
- EP-A- 0 015 423
- CH-A- 405 975
- GB-A- 2 112 679
- GB-A- 2 238 841
- US-A- 4 109 422
- US-A- 4 150 512

## Beschreibung

Die Erfindung betrifft eine Abstrahlvorrichtung für eine Bandschleifmaschine mit einer relativ zum Schleifband positionierten Düsenanordnung zum Blasen von reinigenden Luftstrahlen auf das umlaufende Schleifband und mit einem Antrieb für eine schwingende Bewegung der Düsenanordnung in deren Längsrichtung. Solche vorrichtungen sind, z.B. aus CH-A-405 975 und US-A-4,150,512 bekannt.

Das Schleifband einer Bandschleifmaschine nimmt beim Schleifvorgang Schleifstaub auf, der entfernt werden muß, wenn das Schleifband seine Wirksamkeit über längere Zeit behalten soll. Es ist bekannt, bei einem umlaufenden Schleifband an einer Stelle nahe der Kontaktstelle des Schleifbandes mit dem zu schleifenden Werkstück eine Düsenanordnung in Form eines Rohres mit Austrittslöchern vorzusehen, durch die feine Luftstrahlen auf das Schleifband gerichtet werden, die den Schleifstaub aus dem Schleifband heraustransportieren sollen. Um bei einem erträglichen Luftverbrauch möglichst wirksam zu sein, müssen relativ feine Luftstrahlen erzeugt werden, so daß das Schleifband nur punktuell durch die lineare Düsenanordnung reinigbar ist. Um das Schleifband lückenlos über die gesamte Breite reinigen zu können, wird daher die Düsenanordnung schwingend hin- und herbewegt. Bekannt ist hierfür ein pneumatischer Oszillationsantrieb, bei dem ein Kolben eines doppeltwirksamen Zylinders mit einer Frequenz von 2 bis 4 Hz und einem Hub von ca. 40 - 60 mm hin- und herbewegt wird. Diese Bewegung wird über Kolben auf das in Führungsrollen gelagerte die Düsenanordnung bildende Abstrahlrohr übertragen, das somit über die Breite des Schleifbandes eine schwingende Hin- und Herbewegung ausführt. Die bekannte Anordnung weist den Nachteil auf, daß sie erhebliche Lager- und Verschleißprobleme mit sich bringt. Darüber hinaus verschleißen auch die Führungsrollen.

Die der Erfindung zugrundeliegende Problemstellung besteht somit darin, eine Abstrahlvorrichtung so auszubilden, daß Lager- und Verschleißprobleme zumindest reduziert werden.

Die Lösung dieses Problems gelingt erfindungsgemäß mit einer Abstrahlvorrichtung der eingangs erwähnten Art, die gekennzeichnet ist durch eine in Längsrichtung geführte Lagerung der Düsenanordnung und durch einen ferromagnetischen Ansatz der Düsenanordnung, der im Magnetfeld einer elektrischen Spule positioniert und durch Variation des Magnetfeldes in Längsrichtung bewegbar ist.

Der erfindungsgemäße Schwingantrieb gelingt berührungsfrei mit Hilfe der elektrischen Spule und dem mit der elektrischen Spule zusammenwirkenden ferromagnetischen Ansatz der Düsenanordnung, der somit starr mit der Düsenanordnung verbunden ist und ein Teil der Düsenanordnung bildet.

Wenn dabei der ferromagnetische Ansatz ein Permanentmagnet ist, kann durch Umpolung des Stromes durch die elektrische Spule sowohl die Hin- als auch die Herbewegung gesteuert werden.

Bevorzugt ist jedoch eine elastische Aufhängung der Düsenanordnung, so daß die Düsenanordnung durch das Magnetfeld der Spule nur in einer Richtung gegen die elastische Rückstellkraft der Aufhängung bewegt wird, so daß die entgegengesetzte Bewegung durch die elastische Rückstellkraft der Aufhängung erfolgt. Vorzugsweise ist dabei der ferromagnetische Ansatz durch ein eingeschaltetes Magnetfeld in die Spule hineinziehbar angeordnet.

Das Ein- bzw. Ausschalten des Stroms durch die Spule kann in einer bevorzugten Ausführungsform durch einen Positionssensor für den ferromagnetischen Ansatz gesteuert werden. Auf diese Weise kann der Hub der Oszillationsbewegung elektromagnetisch genau kontrolliert werden.

In einer besonders bevorzugten Ausführungsform der Erfindung ist die elastische Aufhängung durch Blattfedern gebildet, die die Führung der Bewegung der Düsenanordnung in Längsrichtung völlig verschleißfrei bewirken können, so daß ein insgesamt verschleißfreier Schwingantrieb für die Düsenanordnung gewährleistet ist und eine hohe Schwingfrequenz ermöglicht wird.

Die Erfindung soll im folgenden anhand von in der Zeichnung dargestellten Ausführungsbeispielen näher erläutert werden. Es zeigen:
- Figur 1 -: eine schematische perspektivische Darstellung eines über eine Umlenkrolle geführten Schleifbandes mit einer davor angeordneten schwingend bewegten Düsenanordnung
- Figur 2 -: eine schematische Darstellung des Antriebs der Düsenanordnung in einer Ruhelage
- Figur 3 -: eine schematische Darstellung gemäß Figur 2 in der anderen Extremstellung
- Figur 4 -: eine schematische Darstellung gemäß Figur 2 in einer Variante des Antriebs in der Ruhestellung
- Figur 5 -: die Anordnung gemäß Figur 4 in einer Zwischenstellung
- Figur 6 -: die Anordnung gemäß Figur 4 in einer Extremstellung.

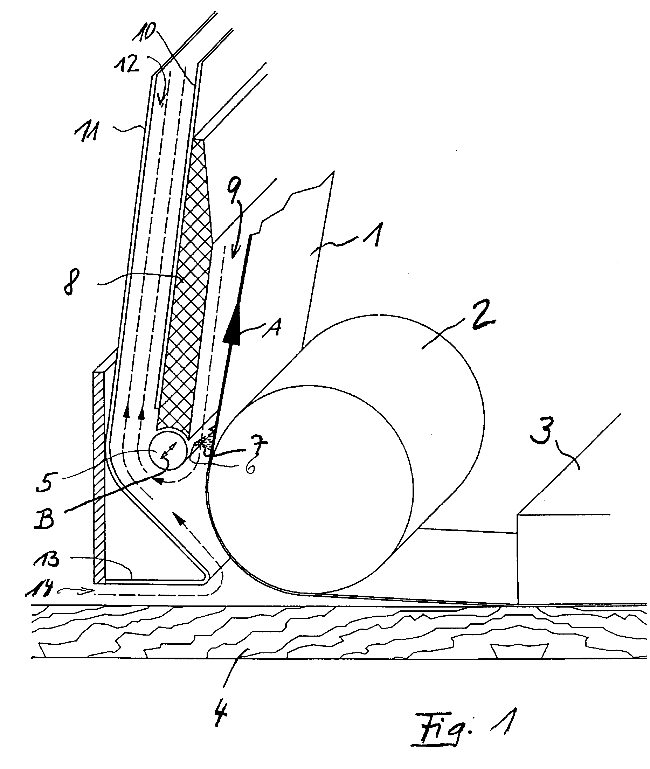

Figur 1 zeigt schematisch einen Teil einer Bandschleifmaschine mit einem umlaufenden Schleifband 1, das um eine Umlenkrolle 2 geführt und mit Hilfe eines Druckschuhs 3 gegen ein unter dem Schleifband 1 hindurchgeführtes Werkstück 4 gedrückt wird, um dessen Oberfläche zu schleifen. Das Schleifband 1 wird durch (nicht dargestellte) weitere Umlenkrollen endlos umlaufend geführt und in Richtung des Pfeiles A in Figur 1 durch eine angetriebene Umlenkrolle angetrieben.

Nach dem Kontakt des Schleifbandes 1 mit dem Werkstück 4 im Bereich des Druckschuhs 3 ist die Außenseite bezüglich der Umlenkrolle 2 mit Schleifstaub gefüllt. Zur Reinigung des Schleifbandes 1 ist an der Außenseite der Umlenkrolle 2 mit geringem Abstand vom Schleifband 1 eine rohrförmige Abstrahlvorrichtung 5 angeordnet, die eine Vielzahl von in Längsrichtung der Abstrahlvorrichtung 5 angeordnete Düsenöffnungen 6 aufweist, durch die feine Luftströme 7 gegen die mit Schleifstaub gefüllte Außenseite des Schleifbandes 1 geblasen werden.

Um auch im Bereich der Zwischenräume zwischen den Düsenöffnungen 6 eine Reinigungswirkung auf dem Schleifband 1 zu erzeugen, wird die Düsenanordnung 5 in deren Längsrichtung schwingend hin- und herbewegt, wie dies in Figur 1 durch den eingezeichneten Doppelpfeil B angedeutet ist.

Eine parallel zum Schleifband 1 verlaufende Trennwand 8 bildet mit dem Schleifband 1 einen Luftkanal 9 und trägt auf seiner Rückseite ein Luftleitblech 10, das zusammen mit einem parallel dazu verlaufenden Luftleitblech 11 einen Absaugkanal 12 für die mit Schleifstaub belastete Luft bildet. Das Luftleitblech 11 ist unterhalb der Düsenanordnung 5 zur Umlenkrolle 2 hin abgekantet und weist einen etwa parallel zum Werkstück 4 verlaufenden Schenkel 13 auf, der zusammen mit dem Werkstück 4 einen weiteren Luftkanal 14 bildet.

Durch ein an den Absaugkanal 12 angeschlossenes Absaugaggregat entsteht eine Luftströmung durch die Luftkanäle 9, 14 am Schleifband 1 vorbei in den Absaugkanal 12, so daß sowohl von der Oberseite des Werkstücks 4 als auch von der Oberseite des Schleifbandes 1 Schleifstaub abtransportiert und über den Absaugkanal 12 abgesaugt wird.

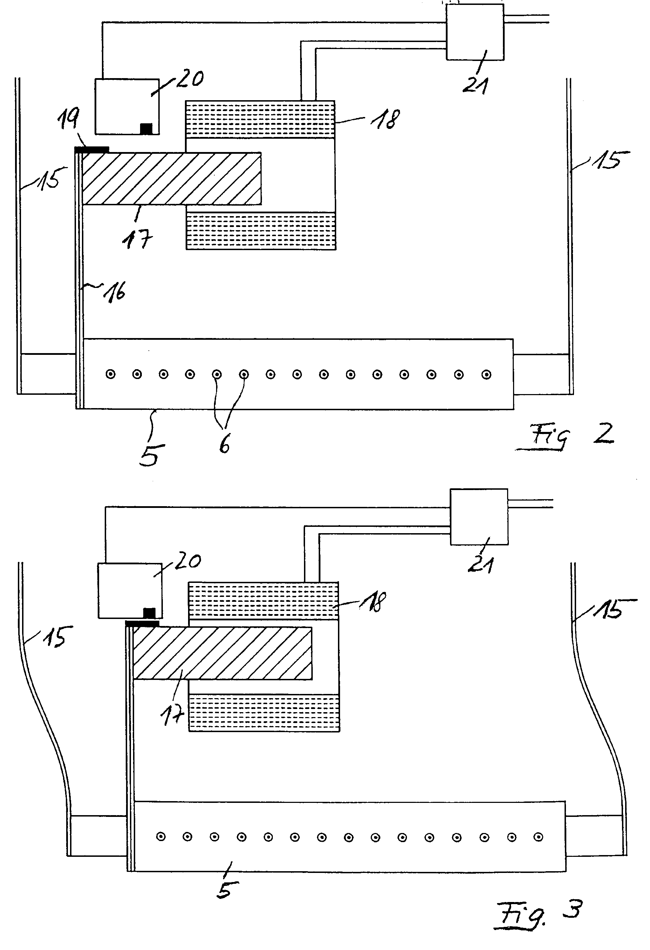

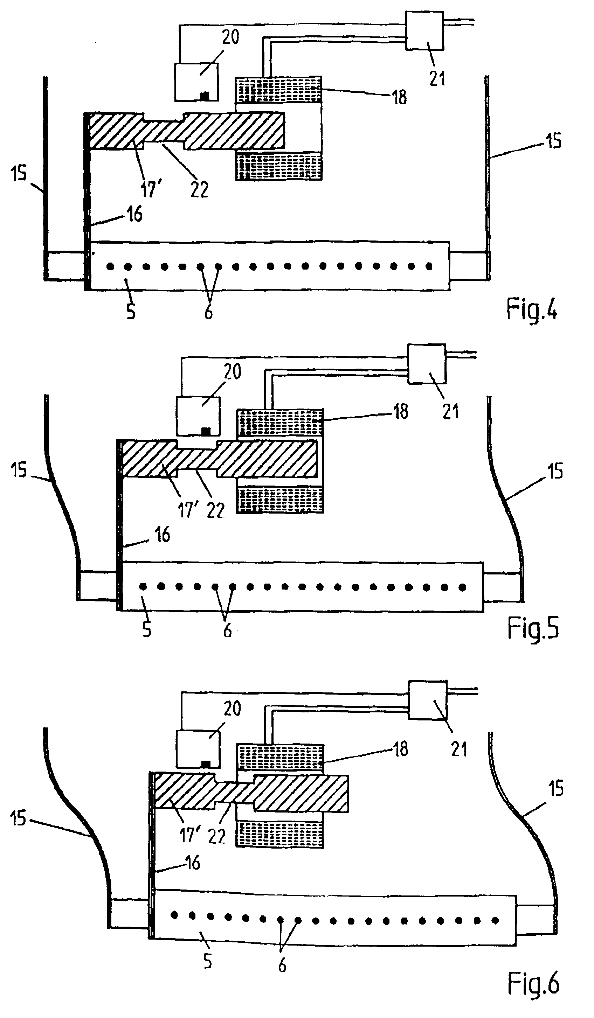

Wie die Figuren 2 und 3 verdeutlichen, ist die Düsenanordnung 5 mit den Düsenöffnungen 6 an beiden Enden mit jeweils einer Blattfeder 15 aufgehängt, deren breiten Seiten senkrecht zur Längsrichtung der Düsenanordnung 5 stehen und somit die Bewegung der Düsenanordnung in Längsrichtung ermöglichen.

Starr mit der Düsenanordnung 5 ist über ein Verbindungsstück 16 ein ferromagnetischer Ansatz 17 verbunden, der in den Innenbereich einer elektrischen Spule 18 teilweise hineinragt.

Der ferromagnetische Ansatz 17 ist mit einer Indikatorplatte 19 versehen, oberhalb der ein Positionssensor 20 angeordnet ist. Mit dem Positionssensor 20 ist eine Steuereinrichtung 21 verbunden, die den Stromfluß durch die elektrische Spule 18 ein- und ausschaltet.

In der in Figur 2 dargestellten Position sind die Blattfedern 15 unbelastet und der Strom durch die elektrische Spule 18 ist ausgeschaltet.

Schaltet die Steuereinrichtung 21 den Stromfluß durch die elektrische Spule 18 ein, wird der ferromagnetische Ansatz 17 in das Innere der Spule 18 weiter hineingezogen.

Figur 3 verdeutlicht eine Position, in der das Indikatorplättchen 19 des ferromagnetischen Ansatzes 17 einen Schwingkreis des Positionssensors 20 bedämpft. Die Bedämpfung wird durch die Steuerung 21 detektiert und führt zum Abschalten des Stromes durch die elektrische Spule 18.

Die in Figur 3 dargestellte Stellung, in der die Blattfedern 15 durch die anziehende Kraft der elektrischen Spule 18 gebogen sind und eine elastische Rückstellkraft erzeugen, stellt somit eine Extremposition für die Bewegung der Düsenanordnung 5 dar. Durch das Abschalten des Stromes durch die elektrische Spule 18 wird die elastische Rückstellkraft der Blattfedern 15 wirksam und bewirkt die Rückstellung der Düsenanordnung 5 in die Ausgangsposition gemäß Figur 2. Da nach einer Bewegung des Ansatzes 17 aus der elektrischen Spule 18 heraus, die Bedämpfung des Schwingkreises des Positionssensors 20 verschwindet, schaltet die Steuerung 21 den Strom durch die elektrische Spule 18 wieder ein, wodurch der ferromagnetische Ansatz 17 erneut angezogen wird und der Schwingungszyklus erneut beginnt.

Die Aufhängung der Düsenanordnung 5 mittels der Blattfeder 15 ist ebenso verschleißfrei wie der berührungslose Antrieb der Düsenanordnung 16 mit Hilfe der elektrischen Spule 18, die den fest mit der Düsenanordnung 5 verbundenen ferromagnetischen Ansatz 17 in ihr Inneres berührungsfrei zieht.

Die Öffnung der elektrischen Spule 18 in die der ferromagnetische Ansatz 17 hineingezogen wird, muß so groß sein, daß die geringe Höhenveränderung des ferromagnetischen Ansatzes 17 durch das Biegen der Blattfedern 15 ohne Anstoßen an den Wickelkörper der elektrischen Spule 18 verfolgen kann.

Selbstverständlich kann die Steuerung der Schwingbewegung auch in anderer Weise als mit dem Positionssensor 20 bewirkt werden. In der einfachsten Ausführungsform kann es ausreichend sein, die Einschaltzeit für den Strom durch die elektrische Spule 18 lediglich mit Hilfe eines Zeitgliedes innerhalb der Steuerung 21 vorzugeben.

Die in den Figuren 4 bis 6 dargestellte Anordnung unterscheidet sich von der Anordnung gemäß den Figuren 2 und 3 durch einen anderen ferromagnetischen Ansatz 17', der mit einer Ausnehmung 22 versehen ist. Die Funktion dieser Anordnung beruht darauf, daß die elektrische Spule den elektromagnetischen Ansatz 17' in die Spule hineinzieht. Der Positionssensor detektiert die Ausnehmung 22, da der Schwingkreis des Positionssensors 20 im Bereich der Ausnehmung 22 durch den ferromagnetischen Ansatz 17' nicht mehr bedämpft wird. Aufgrund der Trägheit der Anordnung schwingt der ferromagnetische Ansatz 17' weiter in die Spule 18 hinein, bis die Position der Figur 6 erreicht wird. Da der Positionssensor 20 nunmehr am Ende der Ausnehmung wieder bedämpft wird, sorgt ein Strom durch die elektrische Spule 18 wieder dafür, daß der Teil des ferromagnetischen Ansatzes 17', der am freien Ende jenseits der Ausnehmung 22 liegt, in die Spule 18 hineingezogen wird, bewirkt somit eine elektrische Anziehungskraft entgegen der Überschwingrichtung. Die Spule 18 sorgt somit für eine Bedämpfung der Überschwingung der Blattfedern 15. Dadurch wird sichergestellt, daß auch in dem Fall, in dem aus energetischen Gründen der Antrieb der Düsenanordnung 5 in der Resonanzfrequenz der Anordnung vorgenommen wird, ein sicherer Schutz gegen ein übermäßiges Überschwingen erreicht wird.

## Patentansprüche

1. Abstrahlvorrichtung für eine Bandschleifmaschine mit einer relativ zum Schleifband (1) positionierten Düsenanordnung (5) zum Blasen von reinigenden Luftstrahlen (7) auf das umlaufende Schleifband (1) und mit einem Antrieb (17, 17'; 18; 21) für eine schwingende Bewegung der Düsenanordnung (5) in deren Längsrichtung, **gekennzeichnet durch** eine in Längsrichtung geführte Lagerung (15) der Düsenanordnung (5) und durch einen ferromagnetischen Ansatz (17, 17') der Düsenanordnung, der im Magnetfeld einer elektrischen Spule (18) positioniert und durch Variation des Magnetfeldes in Längsrichtung bewegbar ist.

2. Abstrahlvorrichtung nach Anspruch 1, dadurch gekennzeichnet, daß der ferromagnetische Ansatz (17, 17') ein Permanentmagnet ist.

3. Abstrahlvorrichtung nach Anspruch 1, gekennzeichnet durch eine elastische Aufhängung (15) der Düsenanordnung (5) und durch eine Bewegung der Düsenanordnung (5) durch das Magnetfeld der Spule (18) in nur einer Richtung gegen die elastische Rückstellkraft der Aufhängung (15).

4. Abstrahlvorrichtung nach Anspruch 3, dadurch gekennzeichnet, daß der ferromagnetische Ansatz (17, 17') durch ein eingeschaltetes Magnetfeld in die Spule (18) hineinziehbar angeordnet ist.

5. Abstrahlvorrichtung nach einem der Ansprüche 1 bis 4, gekennzeichnet durch einen Positionssensor (20) für den ferromagnetischen Ansatz (17, 17') zum Ein- und Ausschalten des Stroms durch die Spule (18).

6. Abstrahlvorrichtung nach Anspruch 4 und 5, gekennzeichnet durch eine Form des ferromagnetischen Ansatzes (17'), durch die der Positionssensor (20) beim Hineinziehen des ferromagnetischen Ansatzes (17') in die Spule (18) abschaltet und beim Überschwingen des wesentlichen Teils des ferromagnetischen Ansatzes (17') zur Unterstützung der Bewegungsumkehr den Strom durch die Spule (18) wieder einschaltet.

7. Abstrahlvorrichtung nach einem der Ansprüche 1 bis 6, dadurch gekennzeichnet, daß die elastische Aufhängung durch Blattfedern (15) gebildet ist.

8. Abstrahlvorrichtung nach einem der Ansprüche 1 bis 7, gekennzeichnet durch einen schwingenden Antrieb der Düsenanordnung (5) in der Resonanzfrequenz des schwingenden Systems.

## Claims

1. Blasting apparatus for a belt grinding machine, having a nozzle arrangement (5) positioned relative to the grinding belt (1) for blowing cleaning air jets (7) onto the revolving grinding belt (1) and having a drive (17, 17'; 18; 21) for an oscillating motion of the nozzle arrangement (5) in the longitudinal direction of the latter, **characterized by** a longitudinally guided bearing arrangement (15) of the nozzle arrangement (5) and by a ferromagnetic projection (17, 17') of the nozzle arrangement, which projection is positioned in the magnetic field of an electrical coil (18) and movable in the longitudinal direction through variation of the magnetic field.

2. Blasting apparatus according to claim 1, characterized in that the ferromagnetic projection (17, 17') is a permanent magnet.

3. Blasting apparatus according to claim 1, characterized by a resilient suspension (15) of the nozzle arrangement (5) and by a movement of the nozzle arrangement (5) by the magnetic field of the coil (18) in only one direction counter to the resilient restoring force of the suspension (15).

4. Blasting apparatus according to claim 3, characterized in that the ferromagnetic projection (17, 17') is disposed so as to be drawable into the coil (18) by means of an activated magnetic field.

5. Blasting apparatus according to one of claims 1 to 4, characterized by a position sensor (20) for the ferromagnetic projection (17, 17') for switching the current through the coil (18) on and off.

6. Blasting apparatus according to claim 4 and 5, characterized by a shape of the ferromagnetic projection (17, 17'), by virtue of which shape the position sensor (20), upon drawing of the ferromagnetic projection (17') into the coil (18), switches off and, upon overshooting of the major part of the ferromagnetic projection (17'), switches back on the current through the coil (18) to assist the reversal of motion.

7. Blasting apparatus according to one of claims 1 to 6, characterized in that the resilient suspension is formed by leaf springs (15).

8. Blasting apparatus according to one of claims 1 to 7, characterized by an oscillating drive of the nozzle arrangement (5) in the resonant frequency of the oscillating system.

## Revendications

1. Dispositif de soufflage pour machine à meuler à bande, comprenant un agencement de buses (5) positionné relativement à la bande de meulage (1) pour souffler des jets d'air de nettoyage (7) sur la bande de meulage circulante (1), et un entraînement (17, 17'; 18; 21) pour un mouvement oscillant de l'agencement de buses (5) selon sa direction longitudinale, caractérisé par un supportage (15) de l'agencement de buses (5), avec guidage en direction longitudinale, et par un appendice ferromagnétique (17, 17') de l'agencement de buses, cet appendice étant positionné dans le champ magnétique d'une bobine électrique (18) et mobile en direction longitudinale par variation du champ magnétique.

2. Dispositif de soufflage selon la revendication 1, caractérisé en ce que l'appendice ferromagnétique (17, 17') est un aimant permanent.

3. Dispositif de soufflage selon la revendication 1, caractérisé par une suspension élastique (15) de l'agencement de buses (5) et par un mouvement de l'agencement de buses (5) à travers le champ magnétique de la bobine (18) dans seulement une direction à l'encontre de la force de rappel élastique de la suspension (15).

4. Dispositif de soufflage selon la revendication 3, caractérisé en ce que l'appendice ferromagnétique (17, 17') est disposé pour pouvoir être attiré à l'intérieur de la bobine (18) par un champ magnétique lorsqu'il est activé.

5. Dispositif de soufflage selon l'une des revendications 1 à 4, caractérisé par un capteur de position (20) pour l'appendice ferromagnétique (17, 17'), aux fins de mise en circuit et hors circuit du courant à travers la bobine (18).

6. Dispositif de soufflage selon la revendication 4 et 5, caractérisé par une forme de l'appendice ferromagnétique (17, 17') par laquelle le détecteur de position (20) coupe le courant lors de l'attraction de l'appendice ferromagnétique (17') dans la bobine (18) puis rétablit le courant à travers la bobine (18) lors de la suroscillation de la partie essentielle de l'appendice ferromagnétique (17'), pour assister le mouvement de retour.

7. Dispositif de soufflage selon l'une des revendications 1 à 6, caractérisé en ce que la suspension élastique est constituée par des ressorts à lame (15).

8. Dispositif de soufflage selon l'une des revendications 1 à 7, caractérisé par un entraînement oscillant de l'agencement de buses (5) à la fréquence de résonance du système oscillant.
